# EUROPÄISCHE PATENTSCHRIFT

(11) **EP 1 647 189 B1**
(45) Veröffentlichungstag und Bekanntmachung des Hinweises auf die Patenterteilung: **07.08.2013**
(21) Anmeldenummer: 05018631.1
(22) Anmeldetag: 26.08.2005
(51) Int. Cl.: A21C 11/10, A21C 15/04

(54) **Waffelstanzmaschine**
Wafer punching machine.
Machine d'estampage de gauffres

(30) Priorität: 28.08.2004 DE 202004013479 U
(43) Veröffentlichungstag der Anmeldung: 19.04.2006
(73) Patentinhaber: Lippl, Herbert, 93426 Roding-Oberdorf (DE)
(72) Erfinder: Lippl, Herbert, 93426 Roding-Oberdorf (DE)
(74) Vertreter: Graf Glück Kritzenberger

(56) Entgegenhaltungen:
- CH-A- 355 749
- DE-A1- 1 657 132
- DE-A1- 19 529 281
- DE-C- 530 125
- US-A- 2 523 178
- US-A- 3 065 584
- US-A- 3 464 299

## Beschreibung

Die Erfindung betrifft eine Vorrichtung zum Stanzen von Waffelplatten und zum Verpacken von gestanzten Waffeln gemäß dem Oberbegriff des Patentanspruches 1.

Das Herstellen von Waffeln erfolgt derzeit mit Hilfe von Schneid- bzw. Sägevorrichtungen, mit denen übereinander liegende Waffelplatten stapelweise in Längs- und Querrichtung in die herkömmliche Waffelform (quadratisch, rechteckförmig, dreieckförmig, kreisförmig) geteilt werden. Bei einem derartigen Vorgehen werden die Schneid- oder Sägemesser nach oben und nach unten im Stapel mit entsprechendem Vorschub in den Stapel hinein und durch den Stapel hindurch bewegt. Ein derartiger Sägevorgang ist relativ zeitaufwendig und ungenau, da die Gefahr des Verrutschens der teilweise gesägten Waffeln groß ist. Insbesondere kommt es hierbei zu erheblichen Mengen an Abfall, weil die Waffeln sehr brüchig sind. Ein erheblicher Nachteil bekannter Schneid- oder Sägevorrichtungen besteht ferner darin, dass es durch Schneiden oder Sägen nicht möglich ist, Waffeln beliebiger Formgebung (z.B. Sterne, Tierformen oder beliebige andere komplizierte Formen) mit derzeit bekannten Vorrichtungen und Maschinen zu schneiden.

Aus der CH 355 749 A ist ein Verfahren und eine Einrichtung zum Herstellen und Verpacken von Gebäckwaffeln bekannt, bei welchem aus einem Teig zunächst Waffeltafeln gebacken werden und die Gebäckwaffeln in ihrer endgültigen Form aus den Waffeltafeln ausgestanzt werden. Hierzu ist eine Stanzvorrichtung vorgesehen, welche im Wesentlichen aus einem Lagerungs- und Zuführungsteil für die zu verarbeitenden Waffeltafeln, einem Stanzteil und einem Antriebs- und Bedienteil besteht, wobei die genannten drei Teile auf einer Grundplatte angebracht sind und insbesondere das Stanzteil oberhalb der Grundplatte vorgesehen ist. Das eigentliche Stanzteil weist einen Stanzkopf auf, der bezüglich der Grundplatte auf und ab beweglich angebracht ist. Der Stanzkopf besteht aus röhrenförmigen Stanzmessern, die an ihrer Außenseite miteinander verbunden sind, an ihrer Vorderkante zu Schneiden und in ihrem Inneren zu Führungskanälen für die ausgestanzten Gebäckwaffeln ausgearbeitet sind. Der Stanzkopf wirkt hierbei gegen ein die Waffeltafel aufnehmendes Stanzwiderlager aus einem gummielastischen Material, welches die zu stanzende Waffeltafel aufnimmt.

Aufgabe der Erfindung ist, die Nachteile bekannter Schneidvorrichtungen auszuschalten und eine Waffelstanzvorrichtung anzugeben, mit der Waffeln bzw. Kekse plattenweise geschnitten bzw. gestanzt werden können und mit sauberen Schnittstellen auch bei komplizierten Formen exakt bei minimalem Ausschuss sowie die gestanzten bzw. geschnittenen Waffeln unmittelbar im Anschluss an den Stanzvorgang selbsttätig in einen Verpackungskarton versandfertig übergeführt werden kann.

Die Aufgabe wird ausgehend von den Merkmalen des Oberbegriffes des Patentanspruches 1 durch dessen kennzeichnende Merkmale gelöst.

Gemäß der Erfindung wird dies mit einer Waffelstanz- bzw. Schneidvorrichtung erreicht, in deren Rahmen, vorzugsweise aus Aluminium eine Stapel- und Zuführeinrichtung zum vereinzelten Zuführen von Waffelplatten vorgesehen ist, die nacheinander einer stationären Stanzvorrichtung zugeführt werden, in der beliebige Formen und Figuren aus der Waffelplatte ausgestanzt werden, in der die gestanzten Waffeln einer Vorrichtung zum versandfertigen Zuführen in einen Verpackungskarton vorgesehen ist, und die eine Steuereinrichtung aufweist, mit der der gesamte Arbeitsablauf der Maschine pneumatisch und elektrisch gesteuert wird. Diese Steuerung umfasst das Einfahren der einzelnen Waffelplatten in die Startposition, die Einstellung der Anzahl von auszuführenden Hüben entsprechend der gewünschten Anzahl von Waffelplatten, die Abfrage, ob in der Maschine ein Karton vorhanden ist, eine Waffelplatte bereitsteht, das Stanzwerkzeug verriegelt ist und der von der Bearbeitung der vorausgehenden Waffelplatte hinterlassene Abfall ausgeblasen ist. Nachdem festgestellt ist, dass Waffelplatten bereitgestellt sind, dass der die gestanzten Waffeln aufnehmende Karton aufgesteckt und verriegelt ist und dass die Schutzvorrichtung verriegelt ist, entnimmt ein Vorschubzylinder eine Waffelplatte aus einer Stapelstation und führt sie dem Stanzwerkzeug zu. Anschließend wird die Waffelplatte gestanzt.

Nach dem Zuführen und Stanzen der Waffelplatte sowie der Übergabe der gestanzten Waffeln in den Karton werden diese Schritte fortlaufend solange wiederholt, bis die eingestellte Hubzahl (Anzahl der Waffelplatten für das Befüllen eines Kartons) erreicht ist. Anschließend wird die Stanzvorrichtung entriegelt und mit dem mit Waffeln gefüllten Karton um 180° geschwenkt. Dann werden die Haltezylinder für den Karton gelöst, der gefüllte Karton wird entfernt und verklebt, das Stanzwerkzeug fährt wieder in die Ausgangsstellung zurück und wird verriegelt. Nachdem ein leerer Karton aufgesetzt ist, wird die Maschine neu gestartet. Das Aufsetzen des Kartons auf die Oberseite des Stanzwerkzeuges wird in der Regel von Hand vorgenommen. Das Einlegen der Waffelplatten kann von Hand oder automatisch über eine Waffelwendestation vorgenommen werden.

Die Waffelstanzeinrichtung nach der Erfindung ist in der Weise ausgebildet, dass das Schneidwerkzeug stationär angeordnet ist, die Schneidfläche des Schneidwerkzeuges die volle Fläche der Waffelplatte hat und das Zerteilen einer ganzen Waffelplatte in einem Arbeitshub erfolgt. Das Schneidwerkzeug besteht dabei aus messerförmigen Stanzelementen, die die Form der zu stanzenden Einzelwaffeln aufweisen. Die Schneiden der Stanzwerkzeuge sind messerscharf ausgebildet und bestehen aus einem Material extrem hoher Qualität, um eine möglichst hohe Standzeit des Werkzeuges zu erzielen. Dies ermöglicht das Stanzen von komplizierten Formen, z.B. Sternen, Tierformen, Pflanzenformen und dergl. Unterhalb der Schneidvorrichtung ist eine höhenbeweglich angeordnete, gesteuert angetriebene Druckplatte vorgesehen, die eine Auflage aus einem elastisch nachgiebigen Material, z.B. Gummi besitzt, auf die eine Waffelplatte aufgelegt wird. Durch eine derartige Auflage wird erreicht, dass die Schneidkante beim Schneid- und Stanzvorgang nicht auf die Druckplatte unmittelbar auftrifft, die in der Regel aus Metall besteht, sondern auf ein weiches, nachgiebiges Material, sodass die Schneiden nur durch das Durchtrennen der Waffelplatte beansprucht wird, nicht durch Auftreffen auf eine harte Unterlage. Die Druckplatte bzw. die darauf befindliche Gummiplatte wird von den beim Stanzen anfallenden Waffelabfällen durch seitliches Ausblasen nach dem Abwärtsbewegen der Druckplatte gereinigt, so dass eine frische Waffelplatte stets auf eine gereinigte Gummiplatte aufgelegt wird. Auf dem Rahmen der Werkzeugoberseite bzw. Deckplatte ist ein Gestell zur Aufnahme eines Waffelkartons angeordnet. Auf dieser Deckplatte befinden sich Eckbolzen zum exakten Aufstecken eines Kartons, zwischen den Eckbolzen sind Führungsbolzen zum Aufziehen des Kartons vorgesehen, und an zwei gegenüberliegenden Längsseiten der Schneidplatte sind Führungsstäbe zur Stabilisierung des Kartons angeordnet.

Der Arbeitsablauf eines Hubes im Betrieb der Stanzmaschine nach der Erfindung ist wie folgt:

Nach Einstellung der Hubhöhe entsprechend der Waffelstärke und Überwachung des Betriebszustands der Maschine wird durch automatische Steuerung der Steuervorrichtung der vom vorausgehenden Zyklus angefallene Abfall ausgeblasen, eine Waffelplatte auf die Druckplatte bzw. Gummiplattenauflage aufgelegt und die Waffelplatte in die Stanzvorrichtung eingefahren. Dann wird die Andrückplatte pneumatisch nach oben bewegt und die Waffelplatte gegen das Schneidwerkzeug bzw. den Lochstempel gedrückt und damit der Stanzvorgang durchgeführt. Die gestanzen Waffeln werden in das obere Werkzeug eingeschoben und die Waffelreste werden mit der Andrückplatte wieder nach unten bewegt und vor dem Einschieben der nächsten Platte ausgeblasen. Dieser Vorgang wird wiederholt, bis die eingestellte Hubzahl erreicht ist. Dann wird der Waffelplattenvorschub angehalten und das Werkzeug entriegelt. Anschließend schwenkt ein Getriebemotor die Werkzeugoberplatte mit dem mit gestanzen Waffeln gefüllten Karton um 180°. Der auf den Kopf gestellte Karton wird vom Senkrechtzylinder übernommen, der den Karton nach unten fährt und quasi auf die Füße stellt. Der Getriebemotor schwenkt dann das Werkzeug um 180° zurück, das Werkzeug wird verriegelt und der Zyklus beginnt von Neuem.

Nachstehend wird die Erfindung in Verbindung mit der Zeichnung erläutert. Es zeigt:

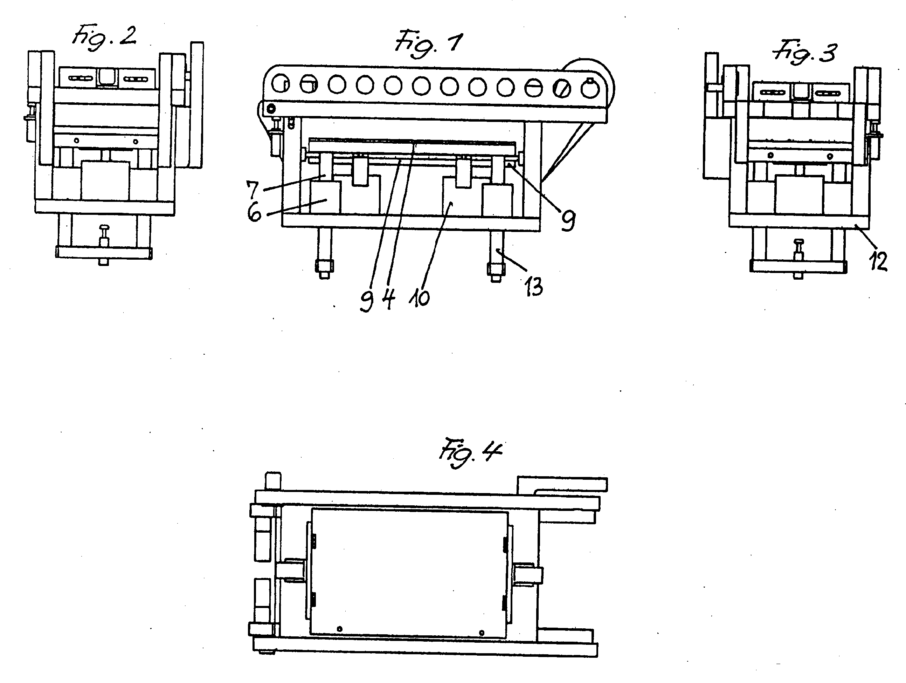

- Figur 1: eine Waffelstanzvorrichtung nach der Erfindung in seitlicher Ansicht,
- Figur 2: eine Vorrichtung nach Figur 1 in Vorderansicht,
- Figur 3: eine Vorrichtung nach Figur 1 in Rückansicht,
- Figur 4: eine Vorrichtung nach Figur 1 in Aufsicht,
- Figur 5: eine perspektivische Ansicht der Waffelstanzvorrichtung,
- Figur 6: eine Seitenansicht der Vorrichtung nach Figur 5,
- Figur 7: eine perspektivische Ansicht der Darstellung nach Figur 5 mit Werkzeug (Stanzplatte) hochgestellt,
- Figur 8: eine Aufsicht auf die Schnittplatte,
- Figur 9: die Schnittplatte in Seitenansicht,
- Figur 10: eine Aufsicht auf eine Abstreifplatte,
- Figur 11: eine Seitenansicht der Abstreifplatte,

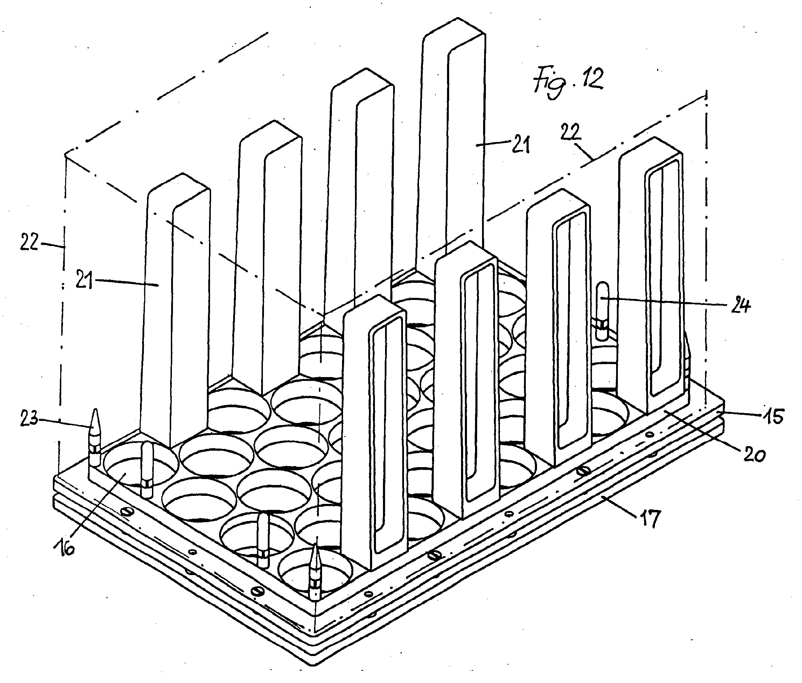

- Figur 12: eine perspektivische Ansicht des zusammengebauten Werkzeuges,
- Figur 13: eine Seitenansicht nach Figur 12,
- Figur 14: eine schematische Darstellung einer einzelnen Schneidbuchse einer Schneidplatte, und
- Figur 15: eine Schnittdarstellung der Schneidbuchse in der Schneidplatte.

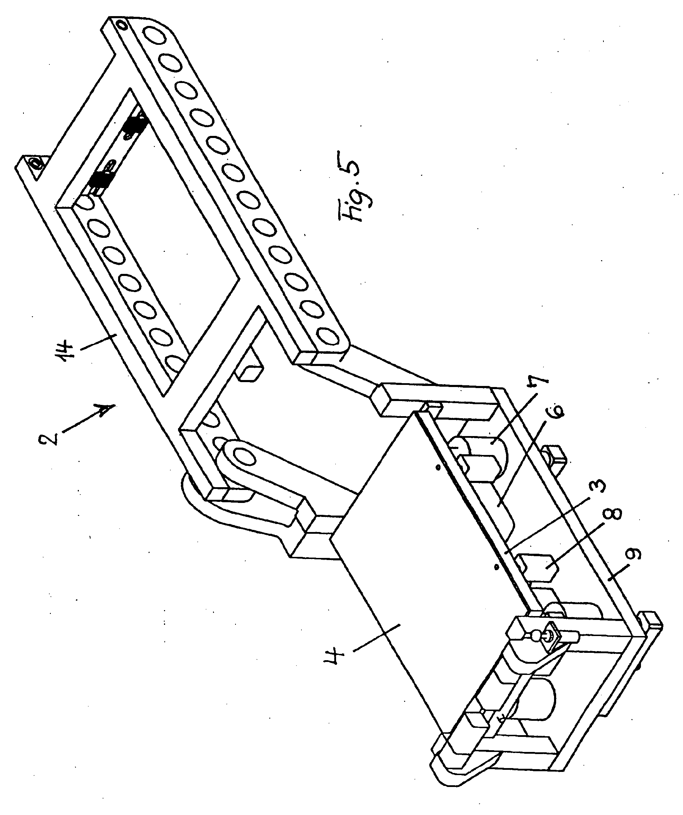

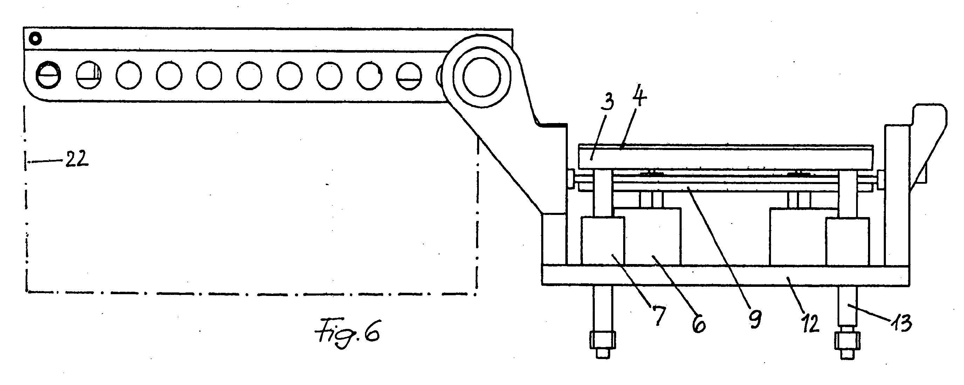

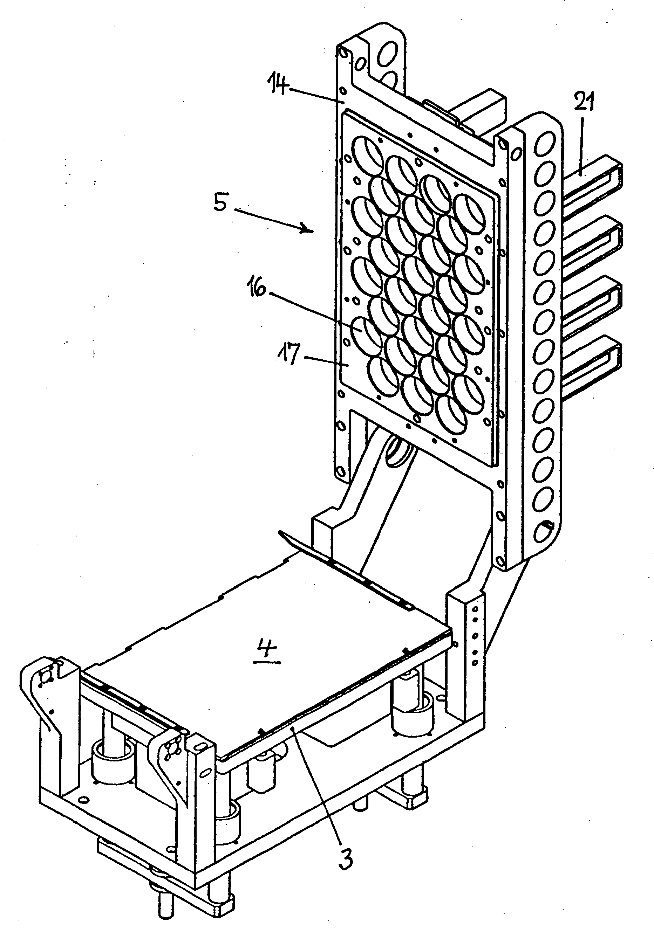

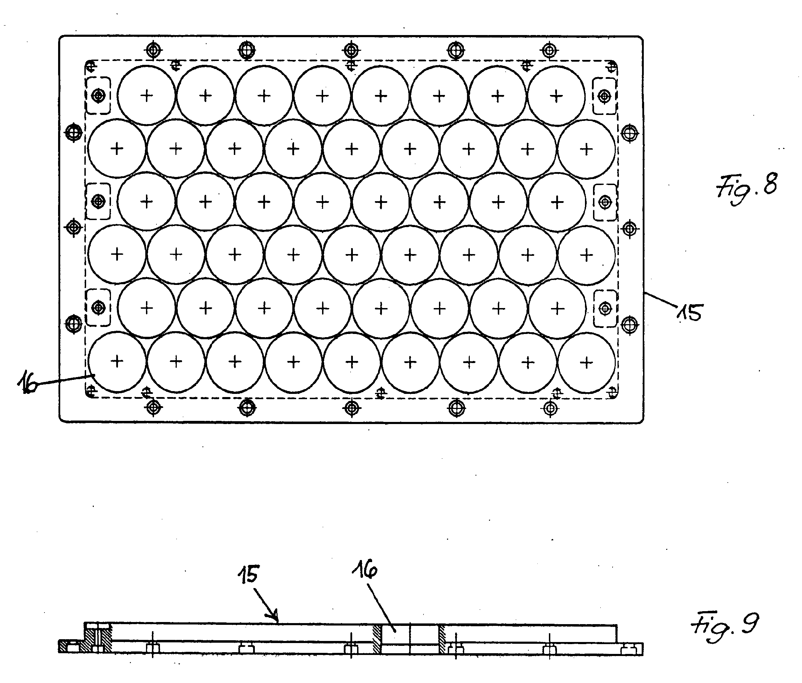

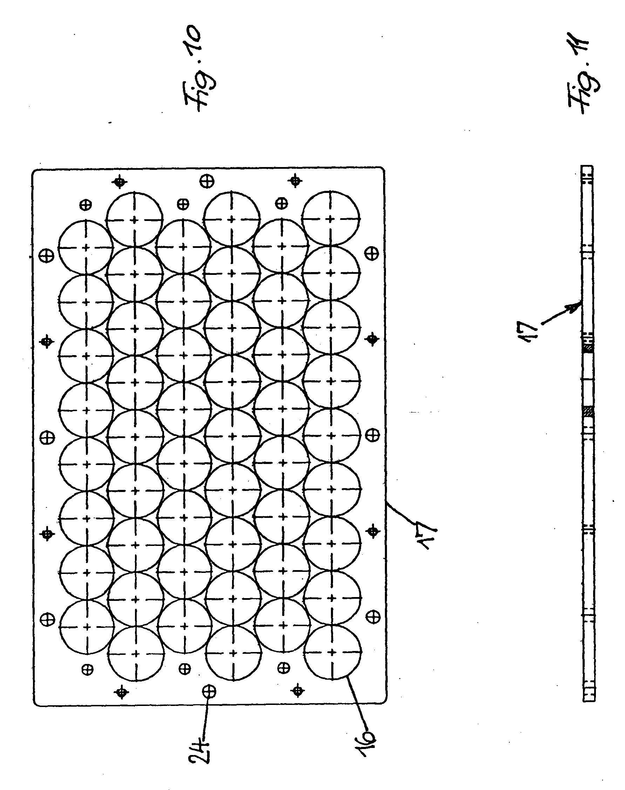

Die Waffelstanzmaschine zum Stanzen von Waffeln aus Waffelplatten besteht aus einer Stapeleinrichtung für die Waffelplatten, mit der eine Waffelwendestation kombiniert werden kann, einer Zuführeinrichtung mit Pneumatikzylindern und mit Blasvorrichtung, einem Stanzmodul, das auswechselbar für unterschiedliche Waffeldurchmesser ausgebildet ist, einer Aufsteckvorrichtung für Kartonagen und einer Schwenkvorrichtung für Kartonagen. Der Maschinenrahmen ist aus Aluprofil, die Stanzwerkzeuge aus Va-Stahl hergestellt. Die Steuerung des Antriebs erfolgt elekropneumatisch. Als Schutzvorrichtung ist ein Lichtschrankenvorhang vorgesehen, die Maschine wird in Einzeltakt-Automatik bedient und ist stufenlos verstellbar. Die Ausbildung der Stanzvorrichtung selbst ist in den Figuren 5, 6, 7 näher dargestellt. Details wie Schnittplatte und Abstreifplatte ergeben sich aus den Figuren 8, 9 bzw. 10, 11.

In einem Maschinenrahmen 1 ist eine Waffelstanzvorrichtung 2 angeordnet, die aus einer Druckplatte 3 mit nachgibieger Auflage 4 (z. B. Gummi) und dem Stanzwerkzeug 5 besteht. Die Druckplatte 3 ist über Hubzylinder 6 und Führungen 7 sowie Anschlagzylinder 8 und eine Befestigungsplatte 9, und Abstandsblöcke 10 auf einer Tragplatte 12 befestigt, die auf Füßen 13 am Boden aufsteht. Das Stanzwerkzeug 5 besteht aus einem Rahmen 14 für die Schneidplatte 15 mit den Schneid- bzw. Stanzbuchsen 16 und der darunter angeordneten Abstreifplatte 17. Zwischen der Abstreifplatte 17 und Auflage 4 ist eine Waffelplatte W angeordnet, die durch die Schneidbuchsen 16 in einzelne Waffeln geschnitten wird. Die Schneidplatte 15 ist mit der Abstreifplatte 17 über Abstandsbolzen 18 und Federn 19 höhenbeweglich verbunden.

Die Schneid- oder Stanzbuchsen 16 des Werkzeugs sind einzeln auswechselbar in einem Stempelträger 20 angeordnet, der mit der Schneidplatte 15 fest verbunden ist. Auf dem Stempelträger 20 sind Führungsstäbe 21 zur Halterung und Stabilisierung eines Kartons 22 (gestrichelt angedeutet), ferner Aufsteckbolzen 23 an den Eckpunkten der Stempelplatte, sowie Führungsbolzen 24 zum Aufziehen des Kartons befestigt. Der Karton ist auf der der Schneidplatte zugewandten Seite offen und nimmt die von den Schneidbuchsen 16 gestanzten Waffeln in nebeneinander liegenden säulenförmigen Stapeln auf, die Schrittweise im Karton aufgebaut werden. Nach Erreichen der vorgegebenen Stapelhöhe wird der Karton durch Umklappen der Deckelhälften und z. B. mit Hilfe eines Klebebandes verschlossen.

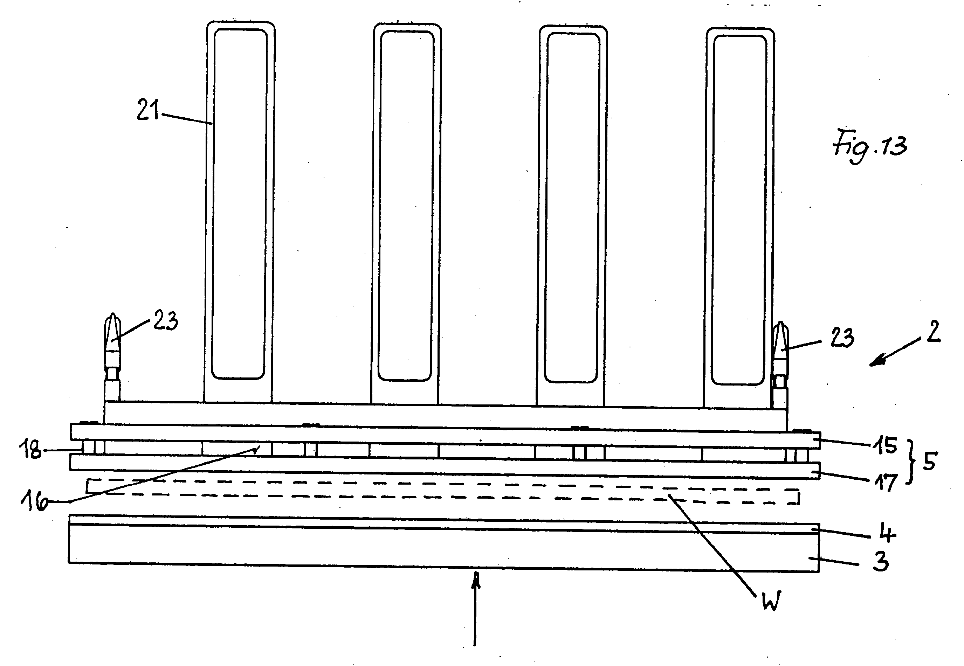

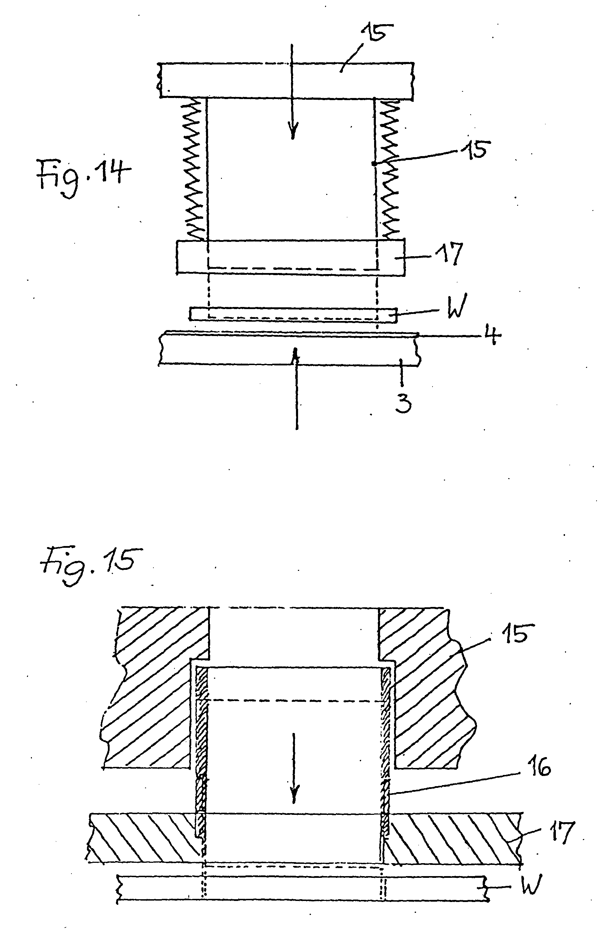

Eine schematische Darstellung der Ausgestaltung eines einzelnen Werkzeugelementes des Werkzeugs nach Figur 13 ist in Figur 14 dargestellt. Figur 15 zeigt eine vergrößerte Darstellung, aus der sich ergibt, dass die Schneidbuchse des Werkzeugs in der Schneidplatte so angeordnet ist, dass der Innendurchmesser der Schneidbuchse 16 gleiche Größe wie der Innendurchmesser der Öffnung der Schneidplatte hat, sodass die Innenwandung des Kanals für die gestanzten Waffeln bündig ausgebildet ist und der Kanal durchgehend gleichen Durchmesser hat.

## Patentansprüche

1. Maschine zum Stanzen von Waffelplatten (W) und zum Verpacken von gestanzten Waffeln, bestehend aus einem Maschinengestell, einer Stapel- und Zuführeinrichtung für Waffelplatten (W), einer Stanz/Schneidvorrichtung (2) zum Ausstanzen von beliebigen Waffelformen aus einer Waffelplatte (W), einer Vorrichtung zur Übergabe der gestanzten Waffeln in einen Verpackungskarton (22) sowie einer Steuereinrichtung zum automatischen Durchführen des Arbeitsablaufes, wobei die gestanzten Waffeln in nebeneinander liegenden säulenförmigen Stapeln schrittweise im Karton aufgebaut werden und unterhalb der Stanz/Schneidvorrichtung (2) eine Druckplatte (3) mit einer darauf angeordneter Auflageplatte (4) aus elastisch nachgiebigem Material zur Aufnahme der Waffel platte (W) vorgesehen ist, und wobei
die Stanz/Schneidvorrichtung (2) stationär angeordnet ist,
die Stanz/Schneidvorrichtung (2) eine Stanz/Schneideplatte (15) mit nach unten stehenden, insbesondere messerförmigen Stanz/Schneidelementen (16) in Form der zu stanzenden Waffeln aufweist,
die Druckplatte (3) höhenbeweglich angeordnet und gesteuert angetrieben ist,
die Stanz/Schneidplatte (15) auf ihrer Unterseite Schneidbuchsen (16) als Schneidelemente (16) aufweist und
der Innendurchmesser einer Schneidbuchse (16) die gleiche Größe wie der Innendurchmesser der die Schneidbuchse aufnehmenden Öffnung der Schneidplatte (15) aufweist, sodass die Innenwandung des Kanals für die gestanzten Waffeln bündig ausgebildet ist.

2. Maschine nach Anspruch 1, **dadurch gekennzeichnet, dass** die Schneidfläche der Stanz/Schneidvorrichtung (2) die volle Fläche der Waffelplatte (W) hat und das Zerteilen einer ganzen Waffelplatte (W) auf einmal mit einem Arbeitshub erfolgt und dass der Druckplatte (3) eine Waffelabfall-Beseitigungsvorrichtung zugeordnet ist.

3. Maschine nach Anspruch 1 oder 2, **dadurch gekennzeichnet, dass** die Stanz/- Schneidvorrichtung (2) eine mit der Stanz/Schneidplatte (15) nachgiebig befestigte Abstreiferplatte (17), die der Auflageplatte (4) zugewandt ist, aufweist, wobei eine zu stanzende Waffelplatte (W) zwischen Abstreiferplatte (17) und Auflageplatte (4) anordenbar ist.

4. Maschine nach Anspruch 3, **dadurch gekennzeichnet, dass** die Abstreiferplatte (17) mit der Stanz/Schneidplatte (15) über Federbolzen verbunden ist.

5. Maschine nach einem der Ansprüche 1 - 4, **dadurch gekennzeichnet, dass** die Stanz/Schneidplatte (15) auf ihrer Oberseite Aufsteck- und Führungsbolzen zur Positionierung des Verpackungskartons (22) sowie Führungsstäbe (21) zur Stabilisierung des Verpackungskartons (22) aufweist.

6. Maschine nach einem der Ansprüche 1 - 5, **dadurch gekennzeichnet, dass** die Stanz/Schneidvorrichtung (2) mit der Stanz/Schneidplatte (15) und der Kartonaufnahmevorrichtung schwenkbar um 180° gegenüber der Anhebvorrichtung ausgebildet ist, und dass in geschwenktem Zustand der Karton (22) mit gestanzten Waffeln abgesetzt und verpackt wird, während die Stanz/Schneidplatte (15) wieder um 180° zurück in die Arbeitsposition über die Anhebplatte geschwenkt wird.

## Claims

1. Machine for stamping waffle plates (W) and for packing stamped waffles, consisting of a machine frame, a stacking and supply unit for waffle plates (W), a stamping/cutting device (2) for stamping out any waffle shape from a waffle plate (W), a device for transferring the stamped waffles into a packing carton (22) as well as a control device for automatically running through the work sequence, wherein the stamped waffles are built up stepwise in the carton in column-like stacks arranged side by side, and underneath the stamping/cutting device (2) there is a pressure plate (3) with a support plate (4) mounted thereon which is mad from an elastically pliable material for receiving the waffle plate (W), and wherein the stamping/cutting device (2) is mounted stationary, the stamping/cutting device (2) has a stamping/cutting plate (15) with downwardly protruding, more particularly cutter-like stamping/cutting elements (16) in the shape of the waffles which are to be stamped out, the pressure plate (3) is mounted vertically movable and is driven in controlled manner, the stamping/cutting plate (15) has on the underneath cutting sleeves (16) as cutting elements (16), and the internal diameter of one cutting sleeve (16) has the same size as the internal diameter of the opening of the cutting plate (15) which receives the cutting sleeve so that the internal wall of the channel for the stamped waffles is formed flush therewith.

2. Machine according to claim 1 **characterised in that** the cutting face of the stamping/cutting device (2) has the total surface area of the waffle plate (W) and the cutting up of one complete waffle plate (W) takes place in one go with one work stroke and that the pressure plate (3) is assigned a waffle waste clearance device.

3. Machine according to claim 1 or 2 **characterised in that** the stamping/cutting device (2) has a scraper plate (17) which is fixed pliably to the stamping/cutting plate (15) and which faces the support plate (4), wherein a waffle plate (W) which is to be stamped can be arranged between the scraper plate (17) and the support plate (4).

4. Machine according to claim 3 **characterised in that** the scraper plate (17) is connected to the stamping/cutting plate (15) by spring bolts.

5. Machine according to one of claims 1 to 4 **characterised in that** the stamping/cutting plate (15) has on its upper side slot-in and guide bolts for positioning the packing carton (22) as well as guide rods (21) for stabilising the packing carton (22).

6. Machine according to one of claims 1 to 5 **characterised in that** the stamping/cutting device (2) is formed with the stamping/cutting plate (15) and the carton receiving device to pivot round 180° in respect of the lifting device, and that in the pivoted state the carton (22) is set down and packed with the stamped waffles, whilst the stamping/cutting plate (15) is pivoted 180° back again into the working position over the lifting plate.

## Revendications

1. Machine pour l'emboutissage de plaques de fabrication de gaufres (W) et pour le conditionnement de gaufres obtenues par emboutissage, constituée par un bâti de machine, un mécanisme d'empilage et d'acheminement pour les plaques de fabrication de gaufres (W), un dispositif d'emboutissage/découpe (2) pour la découpe de n'importe quelle forme de gaufre à partir d'une plaque de fabrication de gaufres (W), un dispositif pour le transfert des gaufres obtenues par emboutissage dans un carton d'emballage (22) et un mécanisme de commande pour la mise en oeuvre automatique du processus de fabrication, les gaufres obtenues par emboutissage étant assemblées dans le carton en pas à pas pour former des piles en forme de colonnes disposées les unes à côté des autres et une plaque de compression (3) comprenant une plaque de support (4) disposée par dessus, constituée d'une matière manifestant une flexibilité élastique, pour la réception de la plaque de fabrication de gaufres (W), étant prévue en dessous du dispositif d'emboutissage/découpe (2), et dans laquelle le dispositif d'emboutissage/découpe (2) est disposé en position stationnaire, le dispositif d'emboutissage/découpe (2) présente une plaque d'emboutissage/découpe (15) comprenant des éléments d'emboutissage/découpe (16) disposés par dessous, en particulier en forme de lames, qui prennent la forme des gaufres à emboutir, la plaque de compression (3) est disposée en mobilité ascendante et est entraînée par commande, la plaque d'emboutissage/découpe (15) présente, sur son côté inférieur, des douilles de découpe (16) à titre d'éléments de découpe (16), et le diamètre interne d'une douille de découpe (16) présente la même dimension que celle du diamètre interne de l'ouverture de la plaque de découpe (15) dans laquelle vient se loger la douille de découpe, si bien que la paroi interne du canal est réalisée pour venir se disposer à fleur avec les gaufres obtenues par emboutissage.

2. Machine selon la revendication 1, **caractérisée en ce que** la surface de découpe du dispositif d'emboutissage/découpe (2) possède la surface totale de la plaque de fabrication de gaufres (W) et la division en plusieurs parties d'une plaque entière pour la fabrication de gaufres (W) a lieu en une fois à l'aide d'une seule course de travail et **en ce qu'**un dispositif d'évacuation des débris de gaufres est attribué à la plaque de compression (3).

3. Machine selon la revendication 1 ou 2, **caractérisée en ce que** le dispositif d'emboutissage/découpe (2) présente une plaque (17) faisant office de déflecteur fixée en flexibilité à la plaque d'emboutissage/découpe (15), qui est tournée vers la plaque de support (4), une plaque de fabrication de gaufres à emboutir (W) pouvant venir se disposer entre la plaque (17) faisant office de déflecteur et la plaque de support (4).

4. Machine selon la revendication 3, **caractérisée en ce que** la plaque (17) faisant office de déflecteur est reliée à la plaque d'emboutissage/découpe (15) via des axes de ressorts.

5. Machine selon l'une quelconque des revendications 1 à 4, **caractérisée en ce que** la plaque d'emboutissage/découpe (15) présente, sur son côté supérieur, des boulons d'enfichage de guidage pour le positionnement du carton d'emballage (22) ainsi que des barres de guidage (21) pour la stabilisation du carton d'emballage (22).

6. Machine selon l'une quelconque des revendications 1 à 5, **caractérisée en ce que** le dispositif d'emboutissage/découpe (2) est réalisé pour pouvoir pivoter, avec la plaque d'emboutissage/découpe (15) et avec le dispositif de réception du carton, par rapport au dispositif de levage en formant un angle de 180°, et **en ce que**, à l'état obtenu après le pivotement, le carton (22) avec des gaufres obtenues par emboutissage est déposé et conditionné, tandis que la plaque d'emboutissage/découpe (15) pivote en retour en formant un angle de 180° dans sa position de travail par-dessus la plaque de levage.
